# EUROPEAN PATENT APPLICATION

(11) **EP 3 139 464 A1**
(43) Date of publication of application: **08.03.2017**
(21) Application number: 16184047.5
(22) Date of filing: 12.08.2016
(51) Int. Cl.: H02J 7/00

(54) **ELECTRONIC DEVICE, METHOD FOR CONTROLLING ELECTRONIC DEVICE AND PROGRAM FOR CONTROLLING ELECTRONIC DEVICE**

(30) Priority: 03.09.2015 JP 2015174029
(71) Applicant: Kyocera Corporation, Kyoto-shi Kyoto 612-8501 (JP)
(72) Inventor: TANAKA, Kensaku, Kyoto, 612-8501 (JP)
(74) Representative: Schwabe - Sandmair - Marx

(57) **Abstract**

An electronic device (1) that can appropriately control power to be input, a method for controlling the electronic device (1) and a program for controlling the electronic device (1)are provided. The electronic device (1) includes a current adjuster (20) that can adjust a current value of power to be input to the electronic device (1) and output power, and a controller (10) that controls the current adjuster (20) so that the current value of power to be input to the electronic device is adjusted according to a voltage value of power that can be supplied to the electronic device and power is output.

## Description

### CROSS-REFERENCE TO RELATED APPLICATIONS

This application claims priority to and the benefit of Japanese Patent Application No. 2015-174029 filed on September 3, 2015, the entire contents of which are incorporated herein by reference.

### TECHNICAL FIELD

This disclosure relates to an electronic device, a method for controlling the electronic device and a program for controlling the electronic device.

### BACKGROUND

Conventionally, many of the mobile electronic devices such as, for example, a smartphone or a tablet PC can be operated by the power charged into a secondary battery (battery). In order to operate with the power charged into a battery, it is necessary to charge the power supplied from outside into a battery of an electronic device in advance. When charging in this manner, for example, an AC adapter and an electronic device are connected. The power supplied from a commercial electric power distribution system (grid) can be charged into a battery of the electronic device. An interface used to connect an electronic device and an AC adapter, that is, a cable or a connector, is configured based on a unique standard provided by each manufacturer. However, there are common standards such as, for example, USB (Universal Serial Bus), irrespective of manufacturer.

When charging an electronic device, it is necessary to control the power to be charged into a battery depending on the power to be supplied and the battery to be charged with the power. For example, PTL 1 suggests a technique in which a battery is charged until its capacity is about to be completely filled by controlling the battery. The battery is controlled so that it is charged by gradually decreasing the current to be charged when the battery is almost fully charged. In the technique, when the current is decreased to a threshold such as 100 mA or less, the battery is considered as fully charged and charging is discontinued. It is desirable that an electronic device is configured such that the charging of a battery is controlled to allow efficient charging.

### CITATION LIST

Patent Literature

PTL 1: JP2007-221993A

### SUMMARY

A disclosed electronic device includes:
a current adjuster that can adjust a current value of power to be input to the electronic device and output power.

The disclosed electronic device further includes a controller configured to control the current adjuster so that the current value of power to be input is adjusted and power is output. The current value of power to be input is adjusted according to a voltage value of power that can be supplied to the electronic device.

A method for controlling the disclosed electronic device includes:
a current adjusting step for adjusting a current value of power to be input to the electronic device and outputting power.

The method further includes a control step for controlling so that the current value of power to be input in the current adjusting step is adjusted and power is output. The current value of power to be input in the current adjusting step is adjusted according to a voltage value of power that can be supplied to the electronic device.

A program for controlling the disclosed electronic device allows a computer to execute a process. The process includes a current adjusting step for adjusting a current value of power to be input to the electronic device and outputting power.

The process further includes a control step for controlling so that the current value of power to be input in the current adjusting step is adjusted. The current value of power is adjusted according to a voltage value of power that can be supplied to the electronic device and power is output.

### BRIEF DESCRIPTION OF THE DRAWINGS

In the accompanying drawings:
FIG. 1 is a block diagram illustrating a schematic configuration of an electronic device according to a disclosed embodiment;
FIG. 2 is a flowchart illustrating an operation of the electronic device according to the disclosed embodiment;
FIG. 3 is a flowchart illustrating another example of the operation of the electronic device according to the disclosed embodiment; and
FIG. 4 is a flowchart illustrating a further example of the operation of the electronic device according to the disclosed embodiment.

### DETAILED DESCRIPTION

In recent years, a technique by which, when charging a battery for an electronic device, the voltage of power to be input to the electronic device is raised, has been developed. The voltage of power is raised to increase the power to be charged. As a result of this, the charging time of the battery is reduced.

For example, in the "Battery Charging Specification Revision 1.2" (hereinafter referred to as "BCS") by the USB Implementers Forum, Inc., USB charging is defined. By USB charging, the power of about 5 V/1.8 A (= 9 W) can be charged (Dedicated Charging Port (DCP)). In order to improve this charging capability, charging by increasing the voltage of power output (VBUS), has been put into practical use (High Voltage Dedicated Charging Port (HVDCP). For example, the voltage of power output is increased by extending the voltage to 9 V, 12 V, 20 V, or the like.

However, even if the voltage to be input to the electronic device is raised, when it exceeds the voltage that can be charged into the battery, the voltage needs to be reduced. The voltage needs to be reduced before it is charged into the battery. Then, when the voltage of power to be charged into the battery is reduced, power loss occurs, and most of the power that has been lost is released as heat.

According to this disclosure, an electronic device, a method for controlling the electronic device and a program for controlling the electronic device can be provided. The electronic device can appropriately control the power to be input.

The disclosed embodiment will be described in detail below with reference to the drawings. The electronic device according to this embodiment is described on the assumption that USB charging is performed by using an interface conforming to the USB standard. However, this disclosure is not limited to such charging aspect, and can be applied to charging that uses an interface conforming to other standards.

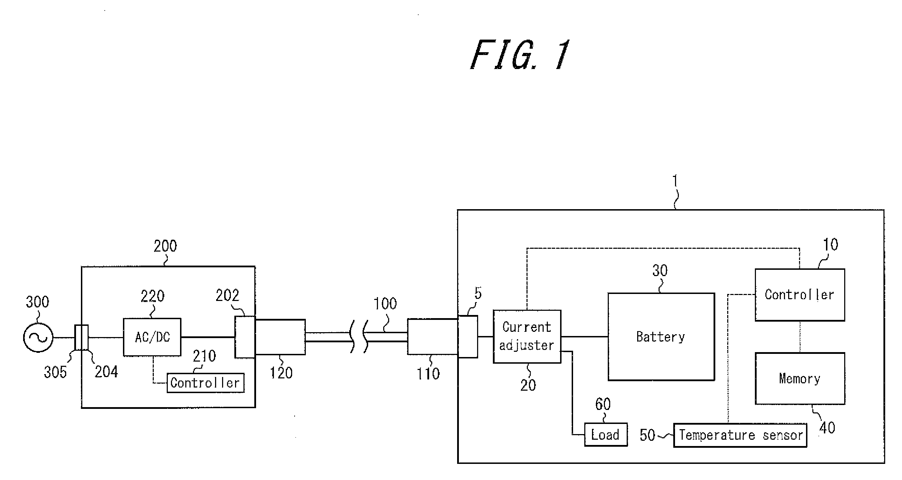

FIG. 1 is a block diagram illustrating a schematic configuration of an electronic device according to the disclosed embodiment.

In FIG. 1, an electronic device 1 and an AC adapter 200 are connected via a USB charging cable 100. As illustrated in FIG. 1, the AC adapter 200 is connected to a grid (commercial electric power distribution system) 300 and is supplied with power therefrom. The electronic device 1 is charged with power supplied from the grid 300 with the connection aspect illustrated in FIG. 1. In FIG. 1, the solid lines connecting each function unit mainly represent the lines through which power flows. The dashed lines connecting each function unit mainly represent lines transmitting various kinds of information such as control signals, or the like.

The electronic device 1 according to this embodiment is described on the assumption that the device is a mobile electronic device provided with a rechargeable battery. The device may be a mobile electronic device, such as, for example, a smartphone or a tablet PC. However, the disclosed electronic device is not limited to such a mobile electronic device. The disclosed electronic device may be any electronic device provided with a rechargeable battery. The disclosed electronic device may be any electronic device such as, for example, a mobile phone, a game terminal, an electronic book reader, a notebook PC, or the like.

The electronic device 1 according to this embodiment includes a receptacle 5 at any position of a body such as a housing. The receptacle 5 may be, for example, a USB micro B socket. The electronic device 1 can be supplied with power for charging a built-in battery via this receptacle 5. Configuration of the electronic device 1 will be further described below.

The AC adapter 200 includes a receptacle 202 and a power plug 204 at any position of the body. The receptacle 202 can be a USB standard A socket. The power plug 204 can be a type that can plug directly into a normal outlet (socket).

The AC adapter 200 converts the power of 100 V AC, for example, supplied from the grid 300 via a power socket 305 to the power of 5 V DC, for example. The AC adapter 200 outputs the power from the receptacle 202. The power socket 305 to which the power from the grid 300 is output can be, for example, a normal socket or outlet. That is, the AC adapter 200 functions as a normal power adapter (wall adapter).

In order to realize such function, the AC adapter 200 includes a controller 210 and an AC/DC converter 220. The controller 210 controls and manages the whole AC adapter 200 including each function unit constituting the AC adapter 200. The controller 210 can be composed of any microcomputer or a dedicated chip, or a microprocessor (CPU) or the like. In particular, in the AC adapter 200, the controller 210 controls the AC/DC converter 220. The controller 210 converts the power of 100 V AC for commercial use, for example, to the DC power of voltage set to 5 V DC, for example. The AC/DC converter 220 can be composed of any converter or the like, that converts from AC voltage to DC voltage by a switching method, for example.

The charging cable 100 includes a plug 110 as a connector on the electronic device 1 side and a plug 120 as a connector on the AC adapter side. In FIG. 1, the charging cable 100 is illustrated by omitting a part thereof. The plug 110 can be a USB micro B plug, for example. This plug 110 is configured to fit in the receptacle 5 of the electronic device 1. Furthermore, the plug 120 can be a USB standard A plug, for example. This plug 120 is configured to fit in the receptacle 202 of the AC adapter 200.

Next, the electronic device 1 is further described.

Besides the above mentioned receptacle 5, the electronic device 1 according to this embodiment includes a controller 10, a current adjuster 20, a battery 30, and a memory 40. The electronic device 1 further includes a temperature sensor 50 and a load 60.

The controller 10 controls and manages the whole electronic device 1 including each function unit constituting the electronic device 1. The controller 10 can be composed of any microcomputer or a processor (CPU), or the like. In particular, in the electronic device 1, the controller 10 controls the current adjuster 20 so that the current value of DC power to be input via the receptacle 5 is adjusted and power is output. Such control of current adjustment is further described below.

Due to control by the controller 10, the current adjuster 20 adjusts the current value of DC power to be input via the receptacle 5 and outputs power. Thus, the current adjuster 20 connects with the controller 10 via a control line. The current adjuster 20 may be configured by including a DC/DC converter, for example. Therefore, the current adjuster 20 can increase or decrease the voltage of DC power to be input via the receptacle 5 and output power. Furthermore, the current adjuster 20 can also adjust the current of DC power to be input via the receptacle 5 and output power. Thus, for the power to be input from the AC adapter 200 side to the electronic device 1, the current value of the power is adjusted. Power is output by the current adjuster 20, and charged into the battery 30. Thus, the current adjuster 20 allows the current value of power to be input to the electronic device 1 to be adjusted and power output.

The battery 30 can be composed of any secondary battery such as a lithium ion battery, a nickel hydride battery, or the like. The electronic device 1 according to this embodiment can charge a secondary battery, such as the battery 30. The battery 30 is charged with the power after its current value is adjusted and power is output by the current adjuster 20.

The memory 40 can be composed of a semiconductor memory, or the like. The memory 40 is described as a memory that stores various programs for operating the electronic device 1 and various kinds of information, and functions as a work memory. The memory 40 also stores algorithms for data analysis and various kinds of arithmetic processing performed by the controller 10 and various reference tables such as a look up table (LUT) to be referred when controlling.

The temperature sensor 50 is a sensor that detects a temperature of a predetermined position of the electronic device 1. In FIG. 1, although only one temperature sensor 50 is illustrated, any number of sensors can be disposed according to the need. The temperature sensor 50 can be composed of a member such as a thermister whose resistance value varies according to the temperature. In the electronic device 1, the temperature sensor 50 can be disposed on various positions. The various positions may be such as, for example, any position of the housing, any position of a built-in substrate, or a position near the battery 30, or the like. The various positions may be according to the need of detecting a temperature.

Furthermore, the temperature sensor 50 does not have to be disposed immediately close to the position where detection of a temperature is required. A temperature of positions other than those where the temperature sensor 50 is disposed can be calculated. The temperature can be calculated by taking a thermal conductivity or the like of the material constituting each member into account, for example. Arithmetic expressions or conversion tables, or the like, required for such temperature calculation may be stored in the memory 40.

In FIG. 1, function units necessary for the electronic device 1 to perform charging control according to this disclosure are mainly illustrated. Therefore, in the case where the electronic device 1 is a communication device such as a smartphone, for example, illustration and description of such members are omitted. The device includes each function unit for realizing the communication function and a display such as a LCD, or the like, for example. Moreover, the battery 30 is charged with the power supplied from outside and supplies the power to each function unit of the electronic device 1. However, supply of power from the battery 30 to each function unit of the electronic device 1 can be realized by the same configuration as the conventional one. Thus, for supply of power from the battery 30, illustration and description is omitted in FIG. 1.

It is to be noted that, for convenience, the load 60 is illustrated as a general term of a power consuming element of each element constituting the electronic device 1 in FIG. 1. For example, the load 60 can be an RF when the electronic device 1 has a communication function, and an LCD when the electronic device 1 has a display function. The load 60 can be the controller 10 configured to control the whole electronic device 1, or the like. As illustrated in FIG. 1, the load 60 of the electronic device 1 is supplied with power from the current adjuster 20. As an actual control, the electronic device 1 can be configured so that the power can be supplied (charged) to the battery 30. The power results from subtraction of the power to be supplied to the load 60 from the power to be output from the current adjuster 20.

Next, an operation of the electronic device 1 according to this embodiment is described.

As described above, if the power to be input to the electronic device (input power) is increased and charged into the battery, the charging time can be reduced. However, when the input power is increased, power loss will occur when the power is converted to the power that can be charged into the battery in the electronic device. As a result of this, the electronic device generates heat.

Thus, in general, the input power is limited on the electronic device side so that the power greater than a predetermined value will not be supplied to the battery. When the voltage of power to be input to the electronic device is fixed by the AC adapter, limitation of input power can be realized by controlling the current of input power (input current).

AC adapters with a maximum voltage of 5V and a maximum current of 1.8 A have been released so far. Some such AC adapters limit the input current to about 1.8 A depending on the specification of the electronic device. In this case, the current of power to be charged into the battery is limited to 1.8A with respect to the fixed voltage of 5V. As a result of this, the power is limited not to exceed 5 V X 1.8 A = 9 W. This numerical value is chosen as an input current, because when controlling with an input current set to a lower value, charging is performed without exerting the performance of the AC adapter enough. As a result of this, the charging time is increased. Currently, the input current is set to about 1.8 A. As a result of this, the performance of the AC adapter is brought out enough. On the other hand, heat generation of the electronic device does not exceed the allowable range. Furthermore, in some cases, the current that can be flown through a cable or a connector used for charging is about 1.8 A.

However, as in the case of charging with the above described HVDCP, when charging is performed by allowing the power output of the AC adapter (VBUS) to be varied, inconvenience will occur. The power output is varied by extending to 9V, 12V, 20V, or the like, for example, in addition to 5 V. The inconvenience will occur with the limitation of the input current that is the same as the conventional one. When the voltage of input current (input voltage) is allowed to be varied due to HVDCP, if limitation of the input current is the same as the conventional one, the limited value of power varies. The limited value of power is varied according to the input voltage. When the input voltage is 9 V, for example, and the input current is 1.8A, the input power is 9 V X 1.8 A = 16.2 W. The input power, 16.2 W is larger than the above described power limitation of 9 W. The same problem also occurs when the input voltage is 12 V or 20 V.

On the other hand, more compact, thinner and lighter weight housing will be desired for a terminal housing of the electronic device in the future. Thus, a means for suppressing heat generation will be required. In such circumstance, when the input voltage is increased due to charging with the HVDCP, the input power is increased and exceeds the limited value as a result. A problem of heat generation of the electronic device is caused.

When the input voltage is increased due to HVDCP, for example, the electronic device 1 according to this embodiment adjusts the input current according to the input voltage. Description is given below on the assumption that, when the battery 30 of the electronic device 1 is charged, an AC adapter corresponding to rapid charging such as the HVDCP is used, for example. The input voltage is not limited to the default of 5 V, but is variable to 9 V, 12 V or 20 V.

In order to perform the operation of this embodiment, the controller 10 of the electronic device 1 sets the input power that is allowable by the electronic device 1. The controller 10 controls the input power so that it meets the set value. For example, when the allowable value (allowable power) of input power of the electronic device 1 is set to not greater than 10 W, the controller 10 controls the current adjuster 20. The controller 10 controls the current adjuster 20 so that the current value of power supplied to battery 30 is adjusted according to the variable input voltage and power is output. The current value of power is adjusted to prevent the input power from exceeding 10 W.

More specifically, the controller 10 controls the current adjuster 20, and as a result of this, the current value is adjusted and power is output as follows, for example.
(1) When the input voltage is 5.0 V (default), the input current is adjusted to 1.8 A and output.
   In this case, the input power is 5.0 V X 1.8 A = 9.0 W, and the power to be supplied to the battery 30 is smaller than the allowable power of 10 W.
(2) When the input voltage is 9.0 V, the input current is adjusted to 1.1 A and output.
   In this case, the input power is 9.0 V X 1.1 A = 9.9 W, and the power to be supplied to the battery 30 is smaller than the allowable power of 10W.
(3) When the input voltage is 12.0 V, the input current is adjusted to 0.83 A and output.
   In this case, the input power is 12.0 V X 0.83 A = 9.96 W, and the power to be supplied to the battery 30 is smaller than the allowable power of 10W.
(4) When the input voltage is 20.0 V, the input current is adjusted to 0.5 A and output.
   In this case, the input power is 20.0 V X 0.5 A = 10.0 W, and the power to be supplied to the battery 30 is equal to the allowable power of 10 W.

Such correspondence relation can be stored in the memory 40 as a predetermined table, or the like. Furthermore, this correspondence relation may not be stored previously, and may be calculated by the controller 10 using a predetermined arithmetic expression stored in memory 40, for example.

Next, the operation of the electronic device 1 according to this embodiment will be described with more specific example.

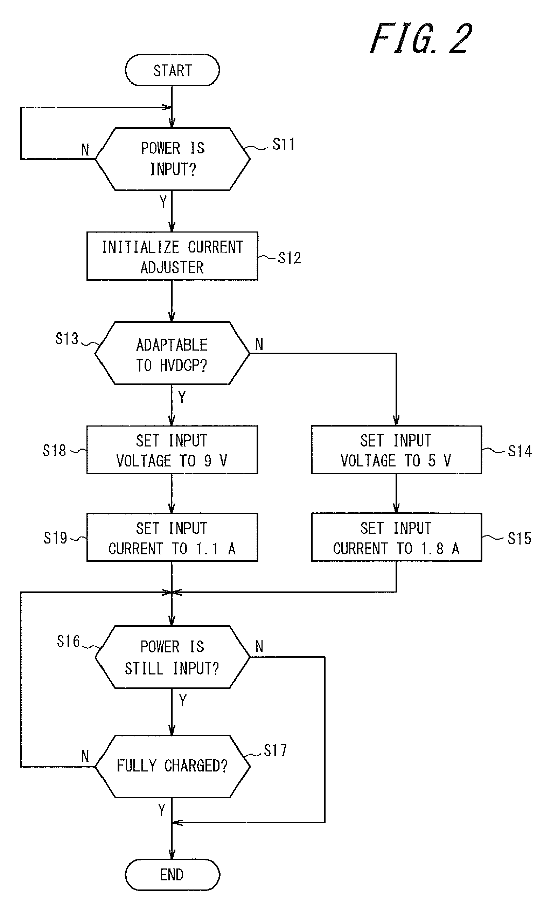

FIG. 2 is a flowchart illustrating the operation of the electronic device 1 according to the disclosed embodiment. As an example, a case where, as an input voltage, the power of either default of 5 V or 9 V when charging with the HVDCP is input from the AC adapter 200 is described.

The operation illustrated in FIG. 2 can be started when the user connects the electronic device 1 and the AC adapter 200, and plugs the AC adapter 200, for example. The electronic device 1 and the AC adapter 200 are connected with the charging cable 100. The AC adapter 200 is plugged into the power socket 305.

When the operation according to this embodiment is started, the controller 10 determines whether the power is input from the grid 300 or not (step S11). In step S11, the controller 10 can determine whether the power is input from the grid 300 or not by detecting the voltage of VBUS of the charging cable 100 of USB, for example.

When determining that the power is input in step S11, the controller 10 controls so that an initial setting of the current adjuster 20 is made (step S12). Here, in the initial setting of the current adjuster 20, as what is called a default setting, various kinds of processing can be performed. The various kinds of processing can be performed according to the specifications of the current adjuster 20 and the electronic device 1. For example, the controller 10 can perform various settings. Various settings are preformed so that output is started with the power of 9 W by setting the current to 1.8 A when the voltage of input power to current adjuster 20 is 5.0 V. After the setting is made as described above, the AC adapter 200 converts the power supplied from the grid 300 from AC to DC, and further to a desired voltage. The AC adapter 200 converts the power according to a predetermined specification, and starts outputting power. The processing relating to such setting can be performed in the same manner as those that have been performed in the charging in conformity with the USB standard (e. g. BCS, or the like). Thus more detailed description is omitted.

When the initial setting is completed in step S12, the controller 10 determines the specification relating to the output of the AC adapter 200 (step S13). In step S13, the controller 10 can determine whether the AC adapter 200 corresponds to the charging with the HVDCP or not, for example. If the AC adapter 200 corresponds to the charging with the HVDCP, charging can be performed with a voltage higher than 5.0 V, which is a voltage of default setting.

In step S13, the specification of the AC adapter 200 is determined. As a result of the determination, if the adapter does not correspond to the charging with the HVDCP, for example, the controller 10 makes settings. The controller 10 makes settings so that the AC adapter 200 outputs at 5V (step S14). That is, in step S14, setting is made so that the input voltage to the electronic device 1 is 5 V DC. In step S14, the controller 10 can make setting necessary for the controller 210 to control so that the AC/DC converter 220 outputs at 5V. It is to be noted that when the setting to output at 5 V DC has been made already in step S12, it is not necessary to make a new setting in step S14.

When the input voltage is set to 5V in step S14, the controller 10 controls the current adjuster 20. The controller 10 controls the current adjuster 20 so that the input current is adjusted to 1.8 A and power is output (step S15). As described above, the correspondence relation in which, when the input power is 5V, the input current is adjusted to 1.8 A and output, may be stored previously in the memory 40. In step S 15, when the input current is adjusted to 1.8 A and output, the electronic device 1 starts charging the battery 30 with 5 V X 1.8A = 9W.

When charging is started, the controller 10 determines whether the input of power detected in step S11 is still maintained or not (step S16). In step S16, as in the case of step S11, the controller 10 detects the voltage of VBUS of the charging cable 100 of USB, for example. As a result of this, the controller 10 can determine whether the input of power from the grid 300 is maintained or not. When the input of power is not maintained in step S16, the controller 10 ends the charging operation according to this embodiment.

When the input of power is still maintained in step S16, the controller 10 determines whether the battery 30 is fully charged or not (step S17). In step S 17, the controller 10 may determine that the battery is fully charged when the voltage of the battery 30 reaches a predetermined value, for example.

When the battery 30 is determined to be fully charged in step S17, the controller 10 ends the charging operation according to this embodiment. On the other hand, when the battery 30 is not determined to be fully charged in step S17, the process is returned to step S16. The controller 10 continues the operation of charging until no more power is input or the battery 30 is fully charged.

Furthermore, in step S13, when the specification of the AC adapter 200 is determined to correspond to charging with the HVDCP, for example, the controller 10 makes settings. The controller 10 makes settings so that the AC adapter 200 outputs at 9V (step S18). That is, in step S18, setting is made so that the input voltage to the electronic device 1 is 9 V DC. In step S18, the controller 10 may perform setting required for the controller 210 to control so that the AC/DC converter 220 outputs at 9V.

When the input voltage is set to 9 V in step S18, the controller 10 controls the current adjuster 20. The controller 10 controls the current adjuster 20 so that the input current is adjusted to 1.1 A and output (step S 19). As described above, the correspondence relation in which, when the input power is 5V, the input current is adjusted to 1.1 A and output, may be stored previously in the memory 40. When the input current is adjusted to 1.1 A and output in step S19, the electronic device 1 starts charging the battery 30 with 9 V X 1.1 A = 9.9W.

After charging is started as described above, the processing in step S16 and step S 17 can be performed in the same manner as described above.

In this manner, in the electronic device 1 according to this embodiment, the controller 10 controls the current adjuster 20. The controller 10 controls the current adjuster 20 so that the current value of power to be input to the electronic device 1 is adjusted. The current value o power is adjusted according to the voltage value of power that can be supplied to the battery 30 and power is output. Here, the controller 10 may control the current adjuster 20 so that the current value of power to be input to the electronic device 1 is adjusted. The current value of power is adjusted to prevent the power to be supplied to the battery 30 from exceeding a predetermined threshold and power is output. Furthermore, the controller 10 may control the current adjuster 20 so that the current value of power to be input to the electronic device 1 is limited. The current value of power is limited according to the magnitude of the voltage value of power that can be supplied to the battery 30 and power is output.

Next, another example of the operation of the electronic device 1 according to this embodiment will be described.

In the operation according to the above described embodiment, although the input current is adjusted according to the input voltage, such operation may be further performed. Such operation may be further performed according to the temperature of the electronic device 1.

As described above, the electronic device 1 includes a temperature sensor 50, and thus can detect a temperature of each desired position. Therefore, when the temperature inside the electronic device 1 is below a predetermined temperature, for example, the controller 10 can perform control. The controller 10 can perform control so that the operation of adjusting the input current according to the input voltage is not performed even if the input voltage is changed to a higher voltage. In this case, the controller 10 can control so that, when the temperature inside the electronic device 1 exceeds a predetermined temperature, the operation of adjusting the input current according to the input voltage is performed. Here, a predetermined temperature value that triggers the operation according to this embodiment may be set in a range that does not exceed the temperature that causes no inconvenience to the electronic device 1. The predetermined temperature value may be stored previously in the memory 40. With such control, an inconvenience caused by heat generation of the electronic device 1 can also be prevented.

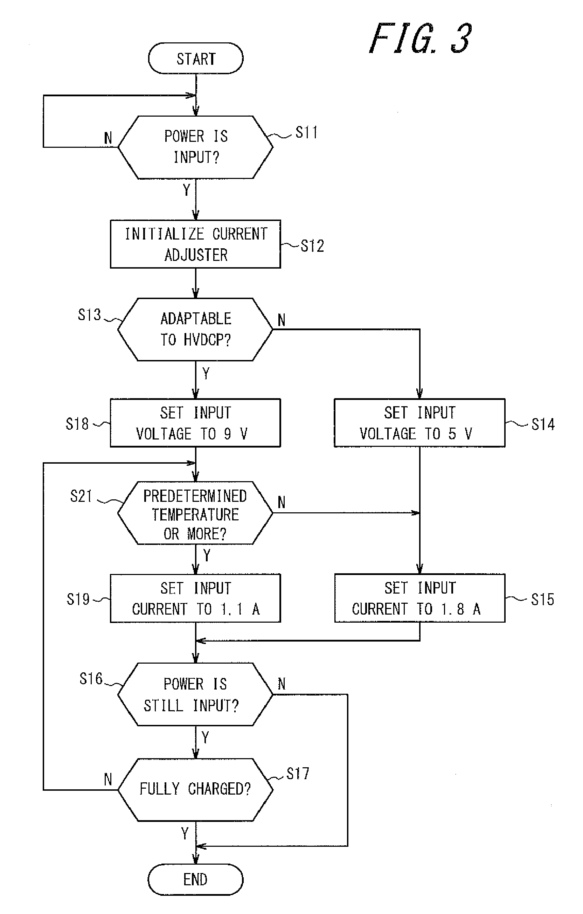

FIG. 3 is a flowchart illustrating the above described example of the operation of the electronic device 1 according to the disclosed embodiment. In the operation illustrated in FIG. 3, the same description as that for FIG. 2 is omitted appropriately.

As illustrated in FIG. 3, in this example, after step S18, the controller 10 determines whether or not the temperature is a predetermined temperature or more (step S21). The temperature is detected by the temperature sensor 50. When the temperature is the predetermined temperature or more in step S21, the controller 10 controls, as in the case of the example of FIG. 2, the current adjuster 20. The controller 10 controls the current adjuster 20 so that the input current is adjusted to 1.1 A and output (step S 19). On the other hand, when the temperature is not the predetermined temperature or more in step S21, the controller 10 does not perform the operation of adjusting the input current to a lower current. The controller 10 controls the current adjuster 20 so that the input current is output at 1.8 A (step S 15). It is to be noted that, in this example, when the battery 30 is not fully charged in step S17, it is preferable that the process is returned to step S21. In addition, it is preferable that the controller 10 continues the processing. Thus, in this example, the controller 10 performs control, even if the input voltage is set to a high voltage (9V) in step S18. The controller 10 performs control so that the adjuster does not perform an operation of adjusting the input current. The input current is adjusted to a lower current (1.1 A). The controller 10 controls so that the adjuster does not perform the operation unless the temperature detected by the temperature sensor 50 is the predetermined temperature or more.

Furthermore, the operation according to this embodiment may be performed in stages according to the temperature. That is, when the temperature inside the electronic device 1 exceeds a first predetermined temperature, the controller 10 can control so that a first stage operation is performed. By the first stage operation, the input current is adjusted according to the input voltage is performed. Furthermore, when the temperature inside the electronic device 1 exceeds a second predetermined temperature, the controller 10 can control so that a second stage operation is performed. By the second stage operation, the input current is adjusted according to the input voltage is performed. In this case, the second predetermined temperature is set higher than the first predetermined temperature. Sequence may be determined so that the input current of the second stage operation is adjusted to a value lower than that of the first stage operation, or the like. In the above described example, although an example of two-stage control according to the temperature is described, it may be a control of three-stage or more according to the temperature.

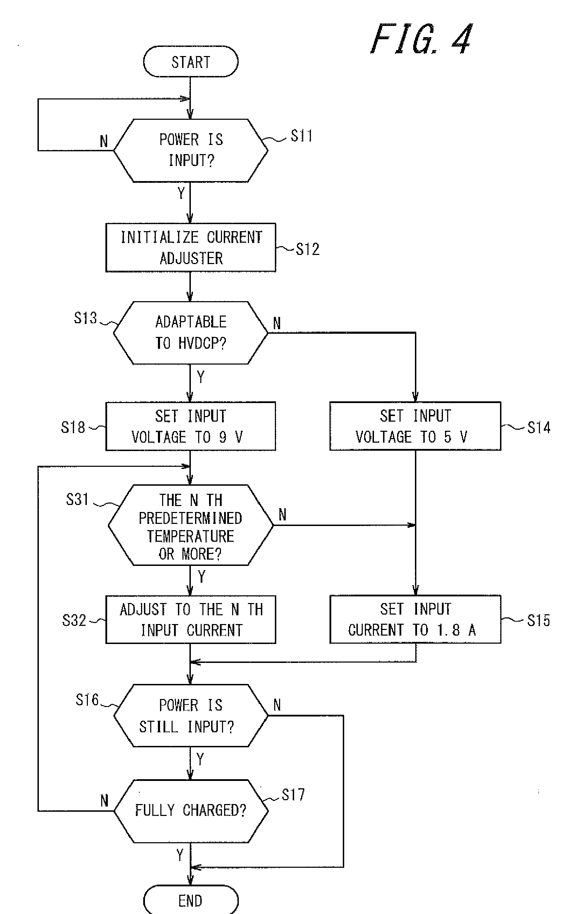

FIG. 4 is a flowchart illustrating the above described example of the operation of the electronic device 1 according to the disclosed embodiment. In the operation illustrated in FIG. 4, the same description as that for FIGS. 2 and 3 will also be omitted appropriately.

As illustrated in FIG. 4, in this example, after step S18, the controller 10 determines whether or not the temperature is the Nth predetermined temperature or more (step S31). The temperature is detected by the temperature sensor 50. Here, first, providing N = 1, the controller 10 determines whether or not the temperature detected by the temperature sensor 50 is the first predetermined temperature or more. In step S31, when the temperature is the first predetermined temperature or more, the controller 10 controls the current adjuster 20. The controller 10 controls the current adjuster 20 so that the input current is adjusted to the first (N = 1) input current that corresponds to the first predetermined temperature and output (step S32). On the other hand, when it is not the first predetermined temperature or more in step S31, the controller 10 does not perform the operation of adjusting the input current to a lower value. The controller 10 controls the current adjuster 20 so that the input current is output at 1.8 A (step S15). It is to be noted that, in this example, when the battery 30 is not fully charged in step S 17, it is preferable that the process is returned to step S31. In addition, it is preferable that the controller 10 continues the processing. Next, in step S31, providing N = 2, the controller determines whether or not the temperature detected by the temperature sensor 50 is the second predetermined temperature or more. If the temperature is the second predetermined temperature or more in step S31, the controller 10 controls the current adjuster 20. The controller 10 controls the current adjuster 20 so that the input current is adjusted to the second (N = 2) input current that corresponds to the second predetermined temperature and output (step S32). On the other hand, if the temperature is not the second predetermined temperature or more in step S31, the controller 10 does not perform the operation of adjusting the input current to a lower value. The controller 10 controls the current adjuster 20 so that the input current is output at 1.8 A (step S15). Hereinafter, the processing can be performed in the same manner as when N = 3.

In this manner, in the electronic device 1 according to this embodiment, the controller 10 may control the current adjuster 20. The controller 10 may control the current adjuster 20 so that the current value of power to be input to the electronic device 1 is adjusted based on the temperature and power is output. The temperature is detected by the temperature sensor 50. That is, when the temperature detected by temperature sensor 50 exceeds a predetermined threshold, the controller 10 may control current adjuster 20. The controller 10 may control the current adjuster 20 so that the current value of power to be input to the electronic device 1 is adjusted and power is output. Furthermore, the controller 10 may set a plurality of predetermined thresholds of a temperature detected by the temperature sensor 50. The controller 10 may control the current adjuster 20 so that the current value of power to be input to the electronic device 1 is adjusted in stages and power is output. The controller 10 may control the current adjuster 20 each time the temperature detected by the temperature sensor 50 exceeds the plurality of predetermined thresholds and power is output.

Furthermore, as described above, instead of or along with the control according to this embodiment that is made according to the temperature, the operation according to this embodiment may be performed. The operation may be performed depending on the charging situation of the battery 30. That is, when the amount of charge of the battery 30 is a predetermined amount or less, the controller 10 can perform control. The controller 10 can perform control so that the operation of adjusting the input current according to the input voltage is not performed. The controller 10 can perform control so that the operation is not performed even if the input voltage is changed to a higher voltage. In this case, when the amount of charge of the battery 30 exceeds the predetermined amount, the controller 10 can control the adjuster. The controller 10 can control the adjuster so that it performs the operation of adjusting the input current according to the input voltage. Here, the predetermined amount of charge that triggers the operation according to this embodiment can be set previously in a range that causes no heat generation that brings inconvenience to the electronic device 1. The predetermined amount may be stored in the memory 40. With such control, the inconvenience caused by heat generation of the electronic device 1 can be prevented.

As described above, according to this embodiment, while making use of the advantage of reduction in the charging time, power loss caused by charging is reduced. As a result of this, suppression of inconvenient heat generation can be expected. Therefore, according to the electronic device 1 of this embodiment, a battery can be charged efficiently.

It is to be noted that this disclosure is not limited only to the above described embodiment, and various changes and modifications can be made. For example, the functions or the like included in each component, each step, or the like may be reordered in any logically consistent way. A plurality of components or steps or the like may be combined into one or divided.

In the above described embodiment, an aspect in which the electronic device 1 and the AC adapter 200 are connected wired using the charging cable 100 of USB has been described. However, this disclosure is not limited to such aspect of charging. For example, this disclosure can be applied also to an aspect in which the electronic device 1 is connected to an electric power device wirelessly for charging, for example.

Furthermore, although each of the above mentioned embodiments has been described as a disclosure of the electronic device 1, each embodiment may be exploited not only as such device. Each embodiment may be exploited not only as such device, but also as a disclosure of a method for such device or a disclosure of a program executed in such device.

## Claims

1. An electronic device, comprising:
a current adjuster that can adjust a current value of power to be input to the electronic device and output power; and
a controller configured to control the current adjuster so that the current value of power to be input is adjusted according to a voltage value of power that can be supplied to the electronic device and power is output.

2. The electronic device according to claim 1, wherein the controller controls the current adjuster so that the current value of power to be input is adjusted to prevent the power to be supplied to the electronic device from exceeding a predetermined threshold and power is output.

3. The electronic device according to claim 1 or 2, further comprising a temperature sensor configured to detect a temperature of the electronic device, wherein the controller controls the current adjuster so that the current value of power to be input is adjusted based on the temperature detected by the temperature sensor and power is output.

4. The electronic device according to claim 3, wherein the controller controls the current adjuster so that the current value of power to be input is adjusted when the temperature detected by the temperature sensor exceeds a predetermined threshold and power is output.

5. The electronic device according to claim 4, wherein the controller sets a plurality of the predetermined thresholds of temperature, and controls the current adjuster so that the current value of power to be input is adjusted in stages each time when a temperature detected by the temperature sensor exceeds the plurality of the predetermined thresholds and power is output.

6. The electronic device according to claim 1 comprising a secondary battery, wherein the controller controls supply of power to the secondary battery.

7. A method for controlling an electronic device, comprising:
a current adjusting step for adjusting a current value of power to be input to the electronic device and outputting power; and
a control step for controlling so that the current value of power to be input in the current adjusting step is adjusted according to a voltage value of power that can be supplied to the electronic device and power is output.

8. A program for controlling an electronic device that allows a computer to execute processing comprising:
a current adjusting step for adjusting a current value of power to be input to the electronic device and outputting power; and
a control step for controlling so that the current value of power to be input in the current adjusting step is adjusted according to a voltage value of power that can be supplied to the electronic device and power is output.
